# EUROPEAN PATENT APPLICATION

(11) **EP 4 056 884 A1**
(43) Date of publication of application: **14.09.2022**
(21) Application number: 21161513.3
(22) Date of filing: 09.03.2021
(51) Int. Cl.: F16L 55/168, F03D 9/34, H02G 5/06

(54) **OFFSHORE PIPELINE SYSTEM FOR THE TRANSPORT OF A FLUID AND OF ELECTRICITY**

(71) Applicant: Siemens Gamesa Renewable Energy A/S, 7330 Brande (DK)
(72) Inventor: Soerensen, Johnny, 6920 Videbaek (DK); Moeller, Jesper, 6700 Esbjerg (DK)
(74) Representative: SGRE-Association

(57) **Abstract**

An offshore pipeline system (100), a method for assembling an offshore pipeline system (100) and a repair system (800) are provided, wherein the offshore pipeline system (100) is configured for transporting electricity and a fluid (103) to or from an offshore wind turbine (WT), the system comprising a pipe (101) for transporting a fluid (103), an electric cable (102) being arranged within the pipe (101), wherein the pipe (101) comprises a cable outlet section (110), configured for guiding the cable (102) out of the pipe for coupling it to an offshore wind turbine (WT), and wherein a separation arrangement (111) is arranged in the cable outlet section (110), wherein the separation arrangement (111) is configured for separating the cable (102) from the fluid (103) at the cable outlet section (110).

## Description

### Field of invention

The present invention relates to the field of an offshore pipeline system for transporting energy from an offshore wind park ashore and to a method for assembling an offshore pipeline system. Furthermore, the present invention relates to a repair system of an offshore pipeline.

### Art Background

With the growing demand for green energy, offshore wind is expected to be a crucial element in the future energy mix. Electrofuels like hydrogen or ammonia are a convenient way of storing electric energy in the form of chemical bond energy. Offshore wind turbines provided with an electrolyzer unit may convert sea water into hydrogen and oxygen or other gasses or fluids. However, such a fluid needs to be transported ashore, where it can be used, for example be converted back into electric energy. At the same time, wind turbines or other offshore infrastructure elements must be provided with electricity or electric signals. In addition to electrofuels, electricity still has to be transported ashore as well.

There may thus be a need for providing a safe and efficient system for transporting a fluid and electricity from an offshore wind turbine onshore.

### Summary of the Invention

This need may be met by the subject matter according to the independent claims. Advantageous embodiments of the present invention are described by the dependent claims.

According to a first aspect of the invention there is provided an offshore pipeline system configured for transporting electricity and a fluid to or from an offshore wind turbine, the system comprising a pipe for transporting a fluid, an electric cable being arranged within the pipe, wherein the pipe comprises a cable outlet section, configured for guiding the cable out of the pipe for coupling it to an offshore wind turbine, and wherein a separation arrangement is arranged in the cable outlet section, wherein the separation arrangement is configured for separating the cable from the fluid at the cable outlet section.

The system according to the first aspect may also provide a transport means for electricity and for a fluid to and from a (offshore fluid and electricity) connecting hub, to and from an energy collector station, to and from an oil and gas production or collector platform or offshore substation.

In the context of the present application, the term "offshore" pipeline system may particularly denote a pipeline system coming or moving away from a seashore toward the water.

In the context of the present invention, the term "wind turbine" may particularly denote a wind driven generator system with a powerhouse mounted on a tower. Hence, the wind turbine comprises a generator for generating electricity, and a gas production unit, such as an electrolyzer, for converting electric energy into chemical bond energy of a gas. A wind turbine in the context of this application may for example further comprise a fluid storage tank and other process units for further processing the gas.

In the context of this application, the term "transport" may particularly denote active, or passive transport, such as transport of a fluid by pressure gradient or active transport of a fluid enabled by a pump or the likes.

In the context of the present invention, the term "electricity" may particularly denote high or low voltage electric current (or electric power) from a generator such as a generator of a wind turbine, but also electric signals such as control signals, for example from a control unit.

In the context of the present invention, the term "fluid" may particularly denote a gas, such as hydrogen, oxygen, nitrogen, an alkane gas, ammonia and other electrofuels, and natural gas. Furthermore, the term "fluid" may also denote a liquid, such as water, in particular pure (demineralized) water, liquefied natural gas, mineral oil, and operating liquids for operating a wind turbine.

In the context of the present invention, the term "pipe" may particularly denote a long tube or hollow body for conducting a liquid or gas, the tube comprising a circumferential wall, and a hollow (a void volume), and at least partially having a cylindrical shape. A pipe may in the sense of the present application be a continuous structure but may also be a structure formed of connected substructures. The wall of the pipe may be rigid or may be flexible.

In the context of the present invention, the term "cable" may particularly denote an electric cable or power line. The cable may usually comprise a conductor (one or more leads) within an insulating jacket. The cable may also be a fiber optics cable for the transmission of optical signals.

According to the approach of the present invention, electric cables necessary for transmitting signals or electric power from or to a wind turbine are installed in the fluid pipeline which additionally transports the fluid, for example a fluid produced in a system (e.g., an electrolyzer) of the turbine. Additionally, a separation arrangement is described, which separates the cable from the fluid at a cable outlet section of the pipe. This may be descriptively described as a cable hang off with a gas split chamber. The separation arrangement separates the cable from the fluid in the pipe. In other words, the separation arrangement isolates the cable such that the cable can be guided out of the pipe without a leakage of fluid. Hence, the cable and the fluid may be transported together via the pipe and may be separated and individually used in the wind turbine. Furthermore, the cable may exit the pipe at a location distanced to a location where the gas exits the pipeline. This has the advantage that the wind turbine may be designed to have a power connection at one point and a fluid connection at a different point.

According to an embodiment of the invention the pipe comprises a circumferential wall and wherein at least part of the cable is arranged within the material of the circumferential wall. In other words, the cable may partially be arranged in the hollow volume of the pipe, and partially in the material, i.e., molded or cast into the material of the pipe wall.

According to a further embodiment of the present invention, the cable outlet section comprises a gas and liquid tight sealing element between the cable and the separation arrangement, wherein the sealing element is selected from at least one of the group consisting of an O-ring, a lip seal, a self-expanding unit, an adhesive bond, and a welded connection for preventing the fluid from leaking through the cable outlet section. The respective sealing means may comprise materials like be rubber, silicone, or similar flexible materials. Also, sealing paste may be used. Descriptively speaking, there may for example be an O-ring arranged around the cable in order to seal a gap between the cable and the separation arrangement. According to an embodiment, there may be provided a self-expanding unit, which may be described as a (round) plug (or clip collar or clamping piece) for being inserted into a pipe or pipe opening. The self-expanding unit may for example consist of or comprise two halves and a (e.g. rubber or sealing) core whose inner diameter can be adjusted to a respective cable diameter, for allowing installation around an (existing) cable or pipe. When the two halves are joined together, the sealing core self-expands by a force applied to the core, thereby creating a sealing around a cable (or pipe). In another embodiment, the material of the cable jacket may for example be welded together with a material of the separation arrangement, such that only the cable and not the fluid may exit the pipe. Preferably, the jacket of the cable may be made of or may comprise the same material as the separation arrangement. There may also be provided an adhesive, such as a glue, to seal any gap between the cable and the separation arrangement. Of course, other ways of sealing the space between cable and the separation arrangement would be possible.

According to another embodiment of the invention, the pipe further comprises a fluid connection couplable to an offshore wind turbine for enabling a fluid transport between the pipe and the offshore wind turbine. In another exemplary embodiment, the fluid connection comprises a valve, in particular a one-way valve, configured for controlling a flow of the fluid going into or out of the pipe. The valve may for example be a regular mechanical non-return valve or check valve, or an actuated and/or controlled valve. The valve may for example ensure that fluid either only enters the pipe or only exits the pipe. Furthermore, the valve may ensure safe operation of the pipeline system, for example by closing or opening when a value, for example a system pressure, exceeds or underruns a certain, predetermined value.

According to another embodiment of the invention, the fluid connection is either arranged within the circumferential wall of the pipe, or the fluid connection is arranged at a front end of the pipe. For example, in the case that the fluid connection is arranged within the circumferential wall of the pipe, the pipe may comprise a t-fitting or t-piece (a piece of pipe shaped like a "T" with a branch), wherein the branch may have the same as, or a different diameter (e.g. smaller) than the pipe. In the case that fluid connection is arranged at a front end of the pipe, the pipe may for example comprise a blind end in which the fluid connection is arranged.

In another exemplary embodiment of the invention, the cable outlet section is arranged either within the wall of the pipe or at a front end of the pipe. For example, in the case that the cable outlet section is arranged within the circumferential wall of the pipe, the pipe may comprise a hole through which the cable may exit. In the case that cable connection is arranged at a front end of the pipe, the pipe may for example comprise a blind end in which the cable outlet section is arranged.

According to a further embodiment of the invention, the separation arrangement comprises a separation plate that covers the cross section of the pipe for separating the volume of the pipe, wherein the sealing element is formed in the separation plate. By covering the whole cross section of the pipe, the separation plate is impermeable for the fluid. Only the cable is allowed to pass through. Thus, the cable and the fluid are separated.

According to another embodiment of the invention, the pipeline system comprises at least one of the following features, wherein the material of the pipe is a plastic material, and wherein the cable is an onshore cable. For example, the material of the pipe may comprise or may be made of carbon fibers, (thermo)plastic materials or composites (e.g. polyethylene ketone, medium-density polyethylene, or high-density polyethylene) or other synthetic materials. Using a plastic material or a non-metallic material in general is highly advantageous because of their corrosion resistance, performance in contact with gas and other chemicals. Furthermore, a plastic pipe is much more efficient to be installed, maintained, and replaced than for example a steel pipe. The pipe may, however, also comprise or be made of steel or other metallic compounds usually used for building pipes for pipeline systems like composite materials. Furthermore, since the cable is arranged within the pipe, according to the first aspect of the present invention, the cable may be an onshore cable which does not need any additional protective jacket which protects the cable from mechanical and chemical damages. The use of an onshore cable, compared to an offshore cable (or submarine cable), is very cost efficient e.g. due to lower material cost and weight. For example, storage on a reel prior to assembly may be done in an economical way. Furthermore, using an onshore cable without a protective (metal) jacket facilitates separating the cable from the gas, due to the relatively smoother surface of the cable and due to its increased flexibility. However, the cable may of course be at least partially jacketed with a protective jacket (an armored offshore cable).

According to an embodiment of the invention, the pipe is configured for transporting a fluid selected from the group consisting of an electro fuel, in particular ammonia or hydrogen, oxygen, methane, liquefied natural gas, or a mixture thereof. It may for example be advantageous to mix different fluids in order to facilitate the transport and lower the corrosiveness and/or the fugacity of the fluid. Hence, the pipe has to be configured accordingly.

According to another embodiment of the invention, an offshore wind park comprises at least one offshore wind turbine, and a pipeline system according to other embodiments of the present invention, wherein the at least one offshore wind turbine and the pipeline system are electrically and fluidically coupled.

The cable in pipe solution according to the present invention is solving the problem of reducing additional costs for electric transmission systems. By the present invention, the void/hollow volume of the pipeline is used for housing the electrical cable(s) for gas (fluid) transmission. The transported gas may however also act as cooling media for the cables in the pipe. The electric cable may be protected from the environment by the pipe. The cable may thus be an unarmored cable with a gas protection liner / layer to prevent the hydrogen or other gasses to access the cable. The cable may also be fitted with a fiber optic cable for monitoring the cable status, e.g., potential damages to the cable, or overheating. There may also be provided a monitoring system for controlling the amount of energy transferred in the electrical cable and the pipeline system in general. In other embodiments, the electric cable may also act as a heating element for adjusting the temperature of the pipeline system in the case of very low (e.g., freezing) temperatures of the surrounding environment.

In order to provide the cable in pipe solution, the pipe may comprise an internal layer for wear and tear from the cable installation, a gas tight barrier layer in the center of the pipe wall and/or an external layer for wear and tear from installation and erosion through the lifetime of the pipe. Seamless transition between electro fuel and electricity transmission is possible. According to the present invention, a gas tight seal of the separation arrangement may separate the cables from the transported gas. The weight of the electrical cable (as well as any other function cables) further ensures that the pipe will not have an updrift from the seabed once the pipe is filled with gas. The pipe may however still be secured on the seabed either by additional counterweights spaced along a length of the pipe and/or be ploughed into the seabed. An offshore installation process may be optimized by only having one pipe laying process. The pipe may be installed on or in the seabed, even in rough conditions. At a later point, the cable may be installed inside the pipe. This may advantageously save cost and thus provides a very efficient system for energy and gas transport in offshore systems. Furthermore, the impact on the environment will be less than in conventional systems, in which a fluid and electricity are transported separately (i.e., wherein the cable is not arranged within the pipe). Thus, also material and installation cost are significantly reduced. It is a further advantage that the cable will be exposed to less risk of damage during installation by being arranged within and protected by the pipe. In this context, it has to be noted that there may also be a smaller pipe (e.g. for transporting another fluid) arranged inside the larger pipe, in addition to, or instead of the cable. The cable may also be arranged within the smaller pipe, wherein the smaller pipe is arranged inside the larger pipe. Various other configurations are possible, according to different embodiments of the invention.

According to a second aspect of the invention, there is provided a method for assembling an offshore pipeline system configured for transporting electricity and a fluid to or from an offshore wind turbine, the method comprising providing a pipe for transporting a fluid, arranging an electric cable within the pipe, wherein the pipe comprises a cable outlet, configured for guiding the cable out of the pipeline for coupling it to an offshore wind turbine, and further arranging a separation arrangement in the pipe, wherein the separation arrangement is configured for separating the cable from the fluid at the cable outlet section.

The assembling method may be carried out offshore, for example with the use of suitable ships. The assembling method also relates to parts of the pipeline system. Furthermore, the assembling may be done so as to retrofit an existing pipeline system which does not comprise any or at least not all of the features of the present invention. For example, an existing pipeline system may be retrofitted with a cable outlet in accordance with embodiments of the present invention.

According to a third aspect of the invention, there is provided a repair system for repairing an offshore pipeline system, in particular an offshore pipeline system as described above. The repair system comprises a jacket, wherein the jacket is arranged circumferentially jacketing a section of a pipe to be repaired of the pipeline system, and wherein the jacket is configured for creating a fluid tight repair chamber, wherein the repair chamber is free of water.

According to an embodiment of the invention, the jacket is a jacket pipe, the jacket pipe having a diameter larger than the diameter of the pipe to be repaired, and at least one reduction pipe at each end of the jacket pipe for reducing the diameter of the jacket to a diameter that is substantially equal to the diameter of the pipe to be repaired such that the reduction provides a coupling between the pipe and the jacket, which may be made fluid tight by means of sealing connections. Optionally, the jacket is an inflatable jacket, configured for being inflated around the section of pipe for creating the fluid tight repair chamber. Descriptively speaking, the jacket may be provided as an oversized pipe which may be slid onto the pipe to be repaired, like a sleeve, wherein the pipe to be repaired is arranged in the hollow of the jacket pipe, and the jacket pipe circumferentially encompasses the pipe to be repaired. The jacket pipe may have a diameter larger than the diameter of the pipe to be repaired. The jacket may further comprise at least one reduction pipe at each end of the jacket pipe, reducing the diameter of the jacket to a diameter that is substantially equal to the diameter of the pipe to be repaired.
The jacket may also be made of a flexible material to be slid onto the pipe to be repaired, like a sleeve, so that upon injecting fluid (in particular air or an inert gas) the jacket is inflatable. Therefore, the inflatable jacket may be formed elastically and extendible for being extended by injecting the fluid. The inflatable jacket may for instance substantially have the shape of a sphere, comprising at least one opening through which the pipe may enter the jacket and which opening circumferentially encompasses the pipe. This ensures that the jacket may be safely and reliably installed around the damaged pipe. The ends of the inflatable jacket may be fixated (e.g., pressed onto) to the pipe by means of a pipe clamp.
In the fluid tight repair chamber, the damaged section of the pipe may be repaired. For example, the damaged section of the pipe may be cut out and a replacement pipe may be installed instead. The replacement pipe may be fixed to the rest of the pipe by gluing, by forming a press fit connection and/or by thermal connection methods, such as welding.

It is an advantage of the repair system that a reparation (or maintenance work, or replacement) of a pipe, in particular a broken pipe, of a pipeline system may be carried out subsea. Instead of heaving the pipe above sea level to carry out the respective work, the pipe may be repaired subsea in a water free environment provided by the fluid tight repair chamber. Thus, the original length of the pipe may be maintained, and the pipe will not have an unused overlength forming an "Omega-profile" on the ground after repair work, such as would be common with conventional repair systems because of the insertion of additional lengths of pipe. Furthermore, the cost of a pipe repair process carried out with the present invention may be reduced by a factor of 10, compared to conventional repair methods.

According to embodiments of the invention, the repair chamber may further comprise an interface configured for inserting or removing repair equipment into or out of the repair chamber.

According to another embodiment, the jacket may be configured to be movable along a longitudinal direction of the pipe to be repaired. In other words, when the jacket is slid onto the pipe to be repaired, like a sleeve, it may first be reversibly moved to a section of the pipe which is not damaged. In a next step, the jacket may be moved to the damaged section of the pipe, where it may be used to provide a repair chamber.

According to an exemplary embodiment of the third aspect of the present invention, a gas and liquid tight sealing connection is arranged between the jacket and the pipe, wherein the sealing connection is selected from at least one of the group consisting of an O-ring, an adhesive, and a welded connection, for sealing the repair chamber against sea water. This may be necessary in order to make the repair chamber gas and liquid tight. Once the jacket has been installed, openings (either of the jacket pipe, or of the inflatable jacket) may be closed (sealed) by means of the aforementioned sealing connections. This ensures that no water may enter the repair chamber in use and that no fluid, in particular no air or inert gas, may exit the repair chamber unwantedly. For example, the material of the jacket may be connected with the material of the pipe to be repaired by a pipe clamp, or by means of welding of gluing, thus creating a sealing connection between the jacket and the pipe to be repaired.

According to an exemplary embodiment of still the third aspect of the invention, there is provided a remotely operated underwater vehicle, which is drivable through sea water to the repair chamber and which is configured for carrying out at least part of repair work for repairing an offshore pipeline system, in particular for installing and removing the jacket. This is particularly advantageous for conducting a safe, precise, and cost-efficient reparation, in particular at great depths, but also in shallow waters. Safety may particularly be increased because potential gas leaks may not pose a threat, because the repair work may be carried out from a remote location, using the remotely operated vehicle.

Another aspect of the invention relates to a method of use of a repair system for repairing an offshore pipeline system. The method may comprise some or all of the following steps in the following order, or in a different order:
A. Locating a position (a repair site) of a damaged section of pipe
B. Cutting out the damaged section of pipe
C. Circumferentially arranging at least one jacket around the pipe
D. Replacing the cut-out section of pipe with a replacement pipe, in particular in line
E. Placing electrofusion couplers at connecting points between the pipe and the replacement pipe
F. Placing (moving) the at least one repair chamber over the repair site
G. Arranging a gas and liquid tight sealing connection between the jacket and the pipe
F. Pumping the jacket dry
G. If the jacket is an inflatable jacket, inflating the inflatable jacket with a gas, thereby creating a repair chamber
H. Connecting the replacement pipe and the pipe, in particular connecting via electrofusion welding
I. Removing the jacket and/or any repair equipment

Some or all of the steps may be carried out, for example, by a manned underwater vehicle, or by an unmanned, remotely operated underwater vehicle. The remotely operated vehicle may also, for example, serve to test the jacket, in particular test the fluid tightness of the jacket, prior to the repair process.

According to a further embodiment, two jackets may be used to provide two repair chambers spaced apart from each other. This may be the case if the section of pipe to be repaired is very long, in particular if a whole section of pipe has to be cut out and replaced. In that case, two connections between the pipe to be repaired and the replacement pipe have to be made. Hence, two jackets may be used.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Figures 1 to 5 show an offshore pipeline system, according to an embodiment of the invention.
Figure 6 shows a separation arrangement, according to an embodiment of the invention.
Figure 7 shows an offshore pipeline system connected to an offshore wind turbine, according to an embodiment of the invention.
Figure 8 shows a detail of a fluid and electric connection between an offshore pipeline system and an offshore wind turbine, according to an embodiment of the invention.
Figure 9 shows an offshore wind park, according to an embodiment of the invention.
Figure 10 shows a repair system for repairing an offshore pipeline system, according to an embodiment of the invention.
Figures 11 to 17 show detailed steps of a method of use of a repair system for repairing an offshore pipeline system, according to an embodiment of the invention.
Figure 18 shows a jacket pipe, according to an embodiment of the invention.
Figure 19 shows a repair arrangement for connecting a replacement pipe and a pipe to be repaired, according to an embodiment of the invention.
Figure 20 shows a detail of a sealing connection between sections of a jacket and a pipe to be repaired, according to an embodiment of the invention.
Figure 21 shows details of segments of a jacket pipe, according to an embodiment of the invention.
Figure 22 shows two repair chambers, according to an embodiment of the invention.
Figure 23 shows a detail of a repair chamber, according to an embodiment of the invention.

### Detailed Description

The illustration in the drawings is schematic. It is noted that in different figures, similar or identical elements or features are provided with the same reference signs. In order to avoid unnecessary repetitions, elements, or features, which have already been explained in the description of a previously described embodiment, are not elucidated again at a subsequent portion of the description.

Furthermore, spatially relative terms, such as "front" and "back", "above" and "below", "left" and "right", et cetera are used to describe an element's relationship to other element(s) as illustrated in the figures. Thus, the spatially relative terms may apply to orientations in use which differ from the orientation depicted in the figures. Obviously, all such spatially relative terms refer to the orientation shown in the figures only for ease of description and are not necessarily limiting, as a device according to an embodiment of the invention may assume orientations different from those illustrated in the figures when in use.

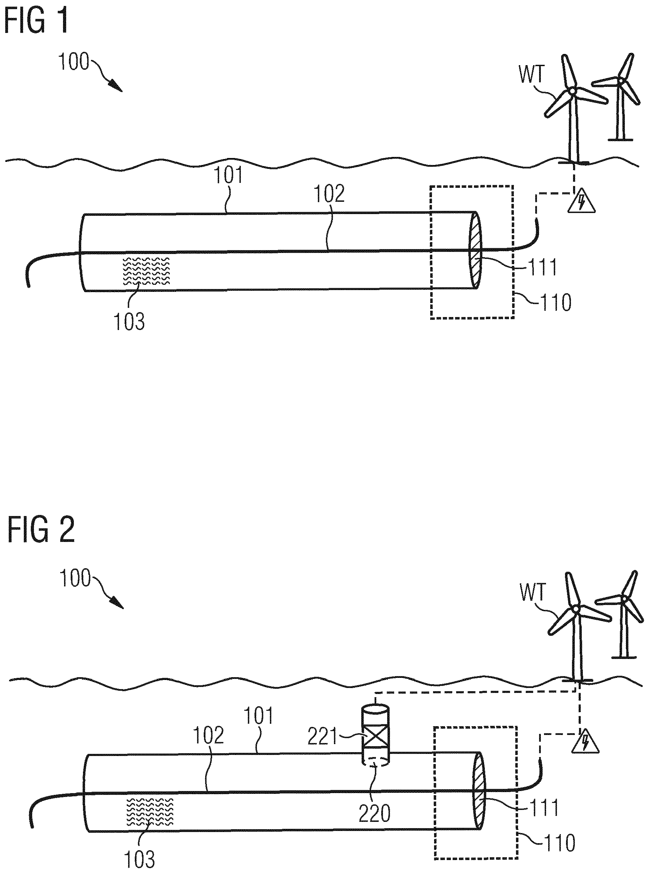

Figure 1 shows an offshore pipeline system 100 configured for transporting electricity and a fluid 103 to or from an offshore wind turbine WT. An electric cable 102 is arranged within a pipe 101 for transporting fluid 103. The pipe 101 comprises a cable outlet section 110, which is configured for guiding the cable 102 out of the pipe for coupling it to an offshore wind turbine WT (the electrical connection to the wind turbine, e.g. via an electric cable of the wind turbine WT is indicated by a dashed line). Furthermore, a separation arrangement 111 is arranged in the pipe 101. The separation arrangement separates the cable from the fluid 103, which is transported in the pipe 101, at the cable outlet section 110.

Figure 2 shows an offshore pipeline system 100 similar to the one shown in Fig. 1. The pipeline system depicted in Fig. 2 furthermore comprises a fluid connection 220. The fluid connection 220 may be configured for allowing a fluid flow into or out of the pipe 101. For example, a fluid produced by a fluid production unit 770 of an offshore wind turbine WT, in particular a gas such as hydrogen, may be introduced into the pipeline system 100 via the fluid connection 220 (the fluid connection to the wind turbine, e.g. via a fluid pipe of the wind turbine WT is indicated by a dashed line). The fluid connection 220 may comprise a valve 221, which may serve to regulate a fluid flow. For example, the valve 221 may be a one-way valve which is configured to allow a fluid to flow into the pipe 101, but not out of the pipe 101. Hence, if for example the wind turbine side fluid pressure is lower than the pressure in the pipeline system 100, the valve 221 helps maintaining the fluid pressure in the pipeline system 100 by not letting any fluid escape through the fluid connection 220. In addition to that, the valve 221 may comprise security features, such as to prevent an over pressurization of either the pipeline system 100 or the fluid production unit 770.

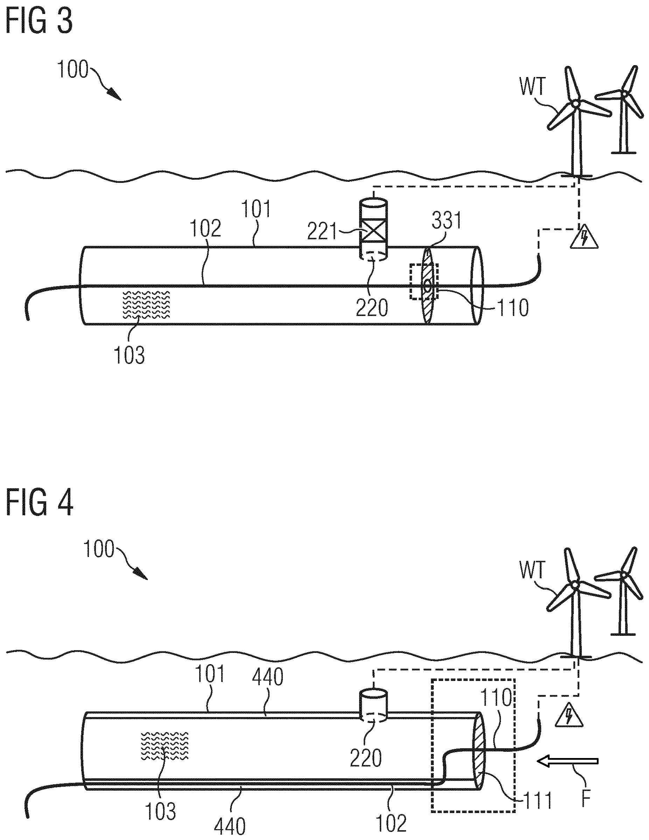

In Figure 3, there is depicted an offshore pipeline system 100, wherein the pipe 101 comprises a separation plate 331 that covers the cross section of the pipe 101 for separating the volume of the pipe 101 into a section comprising the fluid and into another section being free from fluid. In other words, the separation plate 331 acts like a plug with regard to the fluid 103 transported in the pipe 101. In the separation plate 331, there is formed a fluid tight (liquid and gas tight) separation element 113 (not shown), through which the cable 102 may exit the section comprising the fluid. However, the fluid is prevented from exiting the section comprising the fluid by means of the separation element 113.

Figure 4 shows an offshore pipeline system 100, wherein the pipe 101 comprises a circumferential wall 440. According to an embodiment of the invention, at least part of the cable 102 may be arranged within the material of the circumferential wall 440. This may have the advantage that the cross section of the pipe 101 is not partially covered by the cross section of the cable 102 and hence, more fluid 103 may be transported. Furthermore, according to the embodiment depicted in Fig. 4, the cable outlet section 110 is arranged at a front end F of the pipe 101, and the fluid connection 220 is arranged in the circumferential wall 440 of the pipe 101.

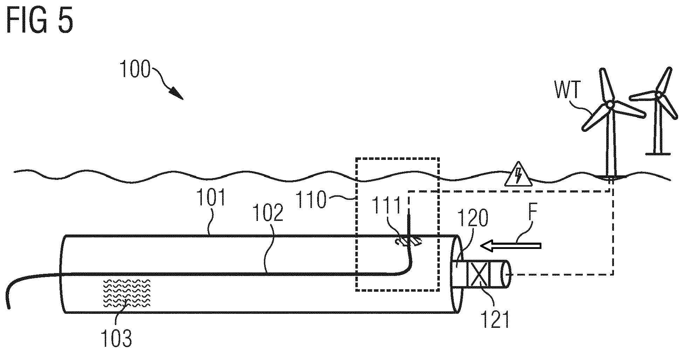

Figure 5 shows an offshore pipeline system 100, wherein, according to an embodiment of the invention, the cable outlet section 110, comprising the separating arrangement 111, is arranged in the circumferential wall of the pipe 101, whereas the fluid connection 220, comprising the valve 221, is arranged at a front end F of the pipe 101. In another embodiment (not shown), it may be possible to arrange both the cable outlet section 110 and the fluid connection 220 in the circumferential wall of the pipe 101, or to arrange both the cable outlet section 110 and the fluid connection 220 at a front end F of the pipe 101.
With regard to both Figures 4 and 5, arranging the cable outlet section 110 and the fluid connection 220 either at a front end F of the pipe 101 or in the circumferential wall 440 has the advantage that the corresponding fluid and electric connections of the wind turbine WT may be designed very flexibly either at the same part of the wind turbine WT or at completely different parts of the wind turbine, for example wherein a gas connection is underneath the surface of the sea, and the electric connection is above sea level (or vice versa) .

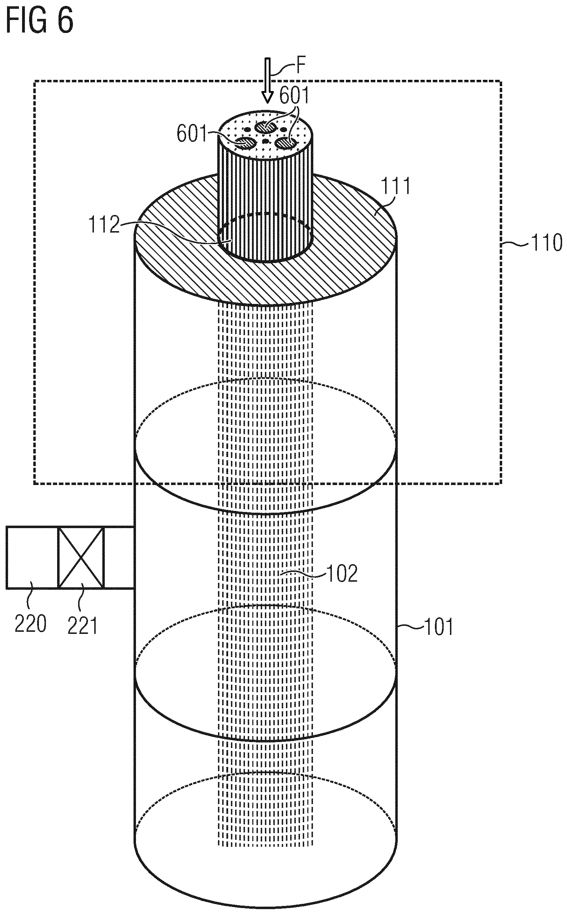

Figure 6 shows a detail of a separation arrangement 111, according to an embodiment of the invention. The cable 102 may comprise one or more leads 601 for transmitting electrical power and/or signals. The pipe 101 comprises a fluid connection 120, comprising a valve 121. At the front end F of the pipe 101, there is arranged the cable outlet section 110, comprising the separation arrangement 111, the separation arrangement 111 comprising the sealing element 112.

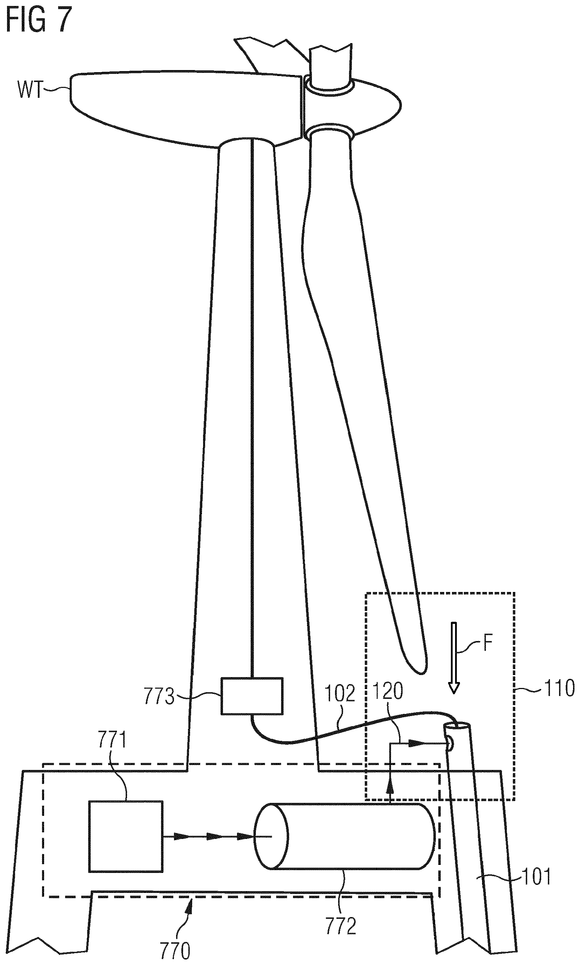

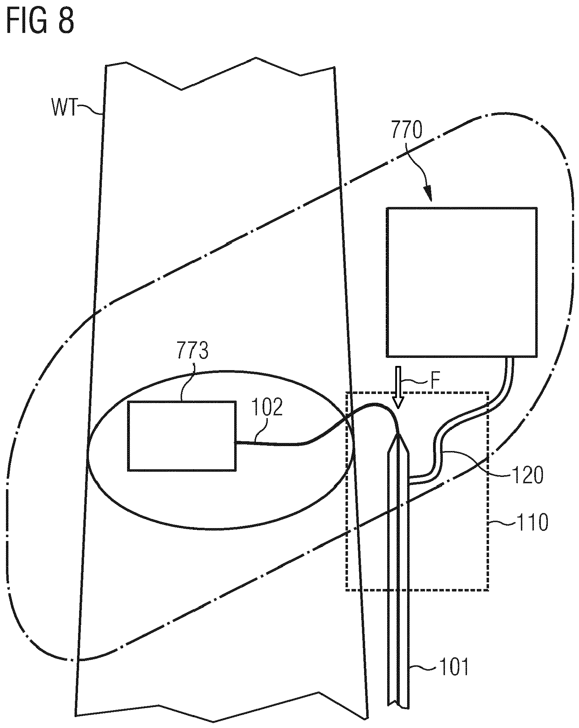

Figure 7 shows an offshore pipeline system connected to an offshore wind turbine WT, according to an embodiment of the invention. Figure 8 shows the embodiment depicted in Fig. 7 in more detail.
The pipeline system is electrically connected via the cable 102, which leaves the pipe 101 at the cable outlet section 110 at a front end F of the pipe 101, to an electric switch unit 773 of the wind turbine WT. The fluid grid 770, comprising a fluid production unit (such as an electrolyzer) and a fluid storage tank 772 configured for storing a produced fluid, are fluidly connected to the fluid connection 120 of the pipeline system. As can be seen in Fig. 7, electric components (for example he electric switch unit 773) and the fluidic components (such as the fluid grid 770) and the corresponding connections are located in different parts of the offshore wind turbine WT. This is facilitated by embodiments of the invention, wherein on the one hand, a single pipeline system may be used for transporting both electricity and a fluid, while on the other hand allowing the electric cable 102 to exit the pipe 101 at a pipe section from the pipe section comprising the fluid connection 120.
According to further embodiments of the invention, the cable outlet section 110 (which may also be described as a cable hang-off) may be placed outside the foundation of the wind turbine WT, but may also be placed inside the foundation of the wind turbine WT.

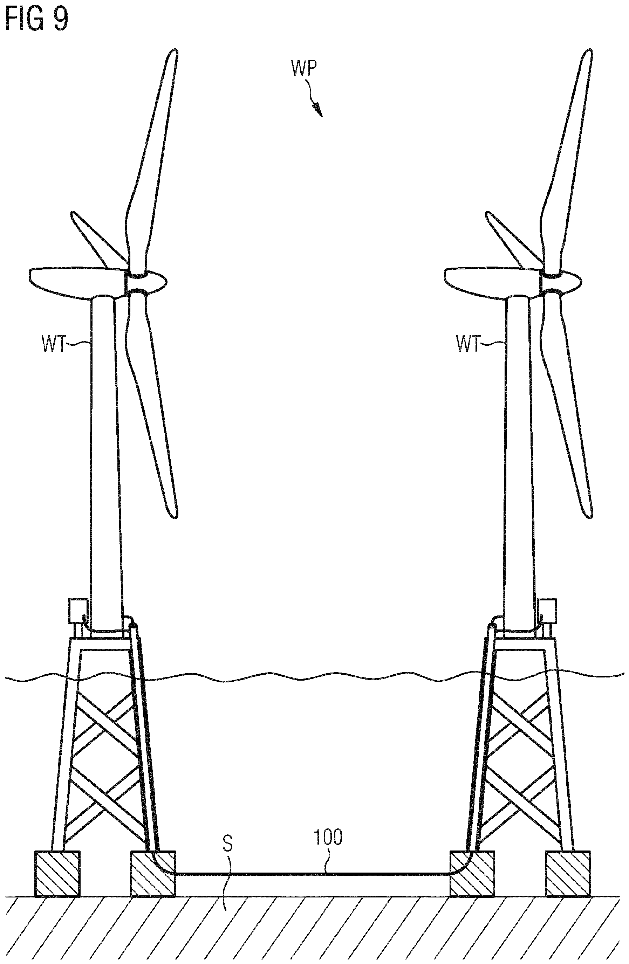

Figure 9 shows an offshore wind park WP, according to an embodiment of the invention. Two offshore wind turbines WT, each comprising a powerhouse mounted on a tower, and a foundation (which may be at least partially underwater), are connected fluidly and electrically via the pipeline system 100. The pipeline system 100 is installed on the seabed S.

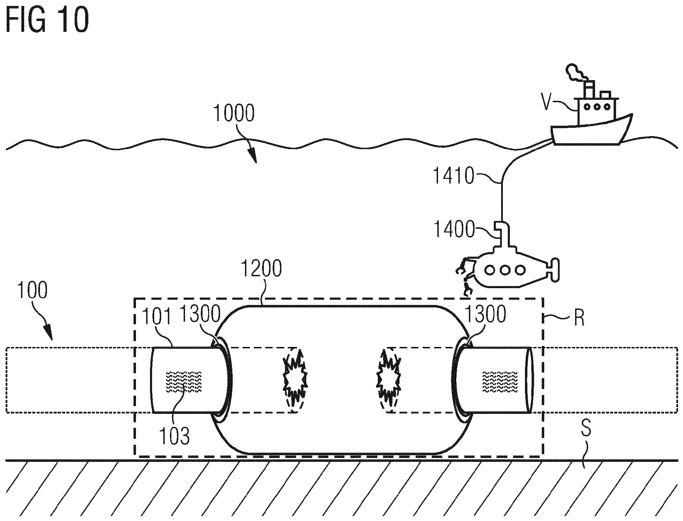

Figure 10 shows a repair system 1000 for repairing an offshore pipeline system, according to an embodiment of the invention. A pipe 101 of a pipeline system 100, normally carrying a fluid 103, is arranged on the seabed S and surrounded by sea water. The pipe 101 has a damage in the repair section R. A jacket 1200 is arranged circumferentially jacketing the section R of the pipe 101 to be repaired. The jacket 1200 is configured for creating a repair chamber around the repair section R, wherein the repair chamber is configured for being free of water. Sealing connections 1300, for example an O-ring or a welded connection, may be arranged between the jacket 1200 and the pipe 101 to be repaired and may ensure that no sea water enters the repair chamber. Installing the jacket 1200, repairing or maintaining the pipeline system 100 and other work may be carried out by means of a remotely operated underwater vehicle 1400, which may be connected via a supply cable 1410 to a service vessel V. The remotely operated underwater vehicle 1400 may of course also be wireless-controlled.

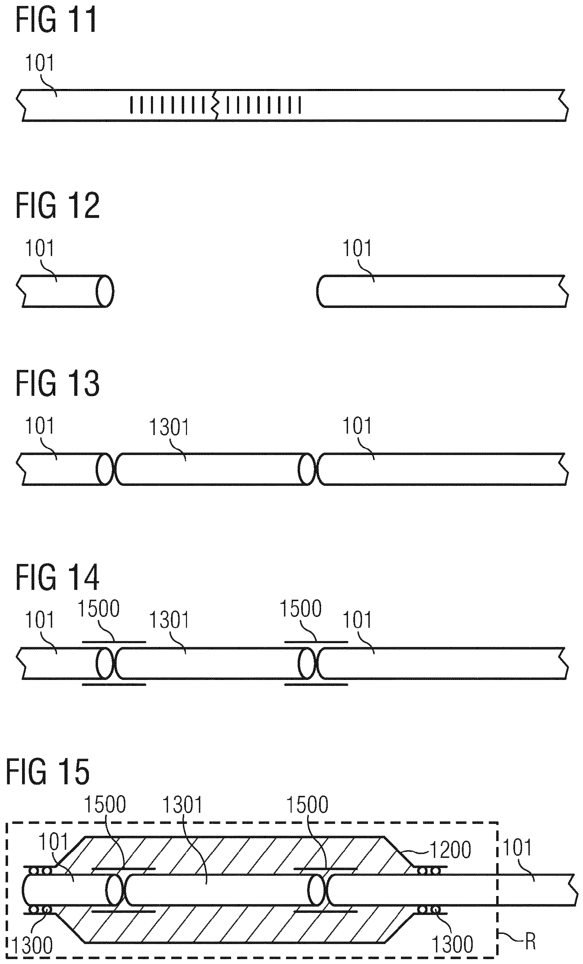

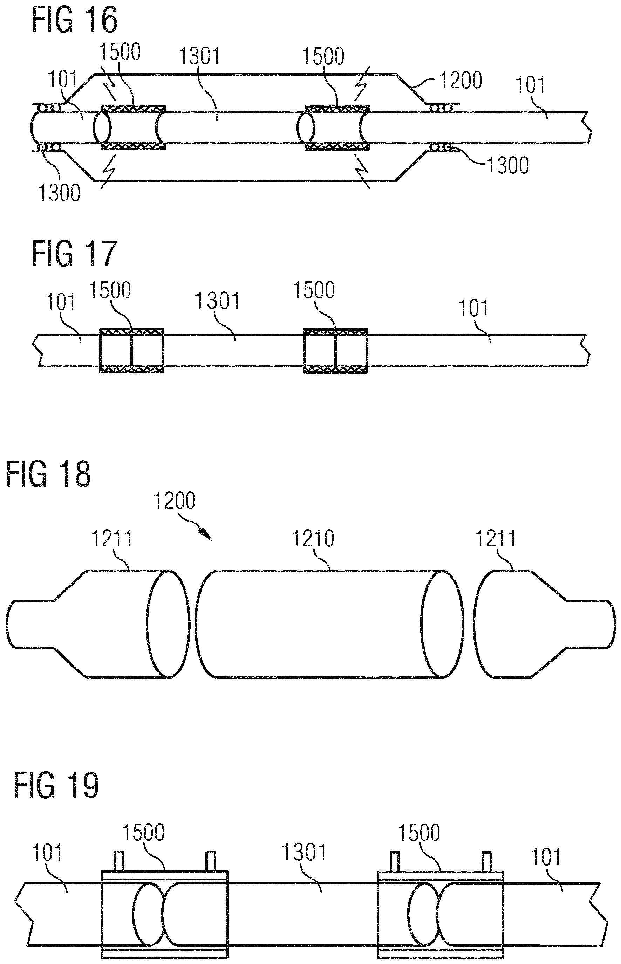

Figures 11 to 17 show detailed steps of a method of use of a repair system for repairing an offshore pipeline system, according to an embodiment of the invention. In Fig. 11, a damaged pipe 101 is shown. In Fig. 12, there is shown a pipe 101, wherein the damaged section is cut out, resulting in two non-damaged sections of pipe 101. Fig. 13 shows a pipe 101 to be repaired, wherein a replacement pipe 1301 is arranged between the two non-damaged sections of pipe 101. From Fig. 14 it can be taken that according to an embodiment of the invention, repair equipment 1500 is arranged at connecting regions of the non-damaged section of pipe 101 and the replacement pipe 1301. Subsequently, as can be seen in Fig. 15, a repair chamber is created by placing a jacket 1200 around the repair section R. The jacket 1200 may first be filled with sea water. Further subsequently, as shown in Fig. 16, the sea water may be pumped out of the jacket 1200, for example by means of a pump. Instead or in addition, pressurized air (or gas, in particular an inert gas) may be injected into the jacket 1200. In the case that the jacket 1200 is an inflatable jacket, the inflatable jacket may be inflated by injecting pressurized air. Consequently, the repair chamber, provided by the jacket 1200, is free of water and a dry repair environment is created. Sealing connections 1300 may ensure that no water may enter the repair chamber and that the injected gas stays inside the repair chamber. The repair work may be carried out in the safe and dry environment provided by the repair chamber. For example, the sections of pipe 101 and 1301 may be connected by means of welding, in particular electrofusion welding. Optionally, as depicted in Fig. 17, the jacket 1200 may be removed after completion of the reparation or maintenance work.

Figure 18 shows a jacket 1200 that is a jacket pipe 1210, according to an embodiment of the invention. The jacket pipe 1210 has a diameter greater than the diameter of the pipe 101 to be repaired (not shown). Furthermore, the jacket pipe 1210 comprises at each end a reduction pipe 1211 for reducing the diameter of the jacket 1200 to a diameter that is substantially equal to the diameter of the pipe to be repaired.

Figure 19 shows a repair arrangement for connecting a replacement pipe 1301 and a pipe 101 to be repaired, according to an embodiment of the invention. For example, the repair equipment 1500 may be an equipment configured for carrying out an electrofusion welding operation.

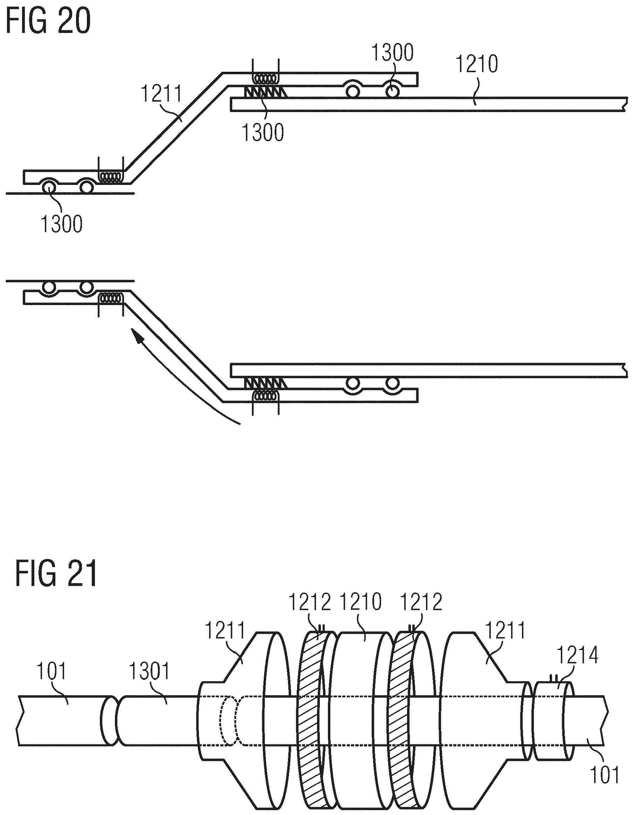

Figure 20 shows a detail of a sealing connection between sections of a jacket 1200 and a pipe 101 to be repaired, according to an embodiment of the invention. A jacket pipe 1210 and a reduction pipe 1211 may be connected and preliminarily sealed by a first sealing connection 1300, which may be an O-ring. The jacket pipe 1210 and the reduction pipe 1211 may then be permanently connected via a sealing connection 1300, which may be done by means of welding using a welding coil. Likewise, a gas and liquid (fluid) tight connection may be established between the jacket 1200, in particular between the reduction pipe 1211 and the pipe 101 to be repaired.

Figure 21 shows details of segments of a jacket pipe 1210, according to an embodiment of the invention. According to an embodiment, the jacket pipe 1210 comprises more than one cylindrical segment 1212, as well as the aforementioned reduction pipes 1211. There may also be provided pipe clamps 1214 for mechanically fixating the jacket 1200 or jacket pipe 1210 to the pipe 101 to be repaired.

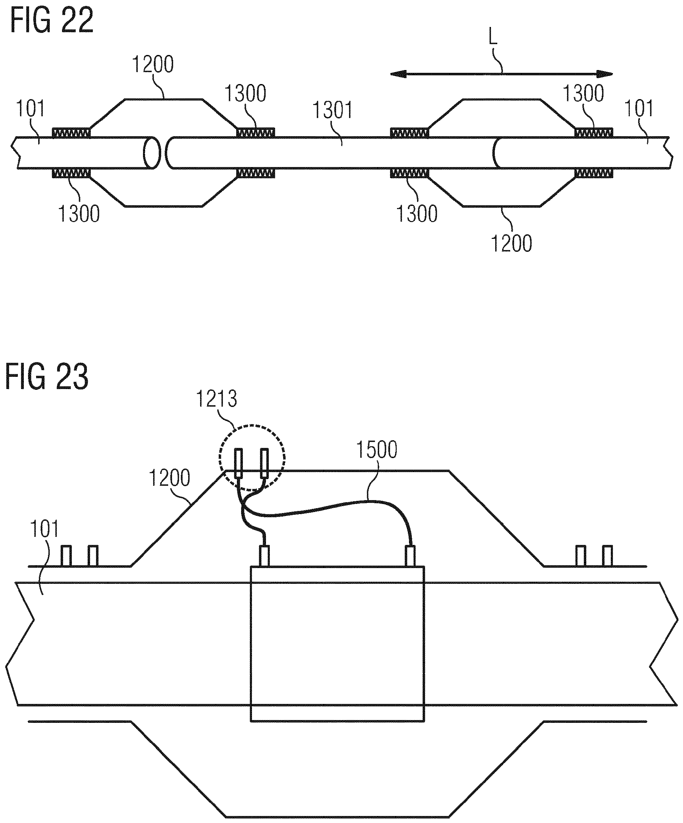

Figure 22 shows two repair chambers provided by two separate jackets 1200, according to an embodiment of the invention. Two jackets 1200 may be used to provide two repair chambers spaced apart from each other. This may be the case if the section of pipe 101 to be repaired is very long, in particular if a whole section of pipe 101 has to be cut out and replaced. In that case, two connections between the pipe 101 to be repaired and the replacement pipe 1301 have to be made. Hence, two jackets 1200 may be used, wherein each jacket 1200 is made liquid and airtight by means of the sealing connections 1300. A jacket 1200 according to an embodiment of the invention may be movable along a longitudinal direction L of the pipe 101 to be repaired. In other words, when the jacket 1200 is slid onto the pipe 101 to be repaired, like a sleeve, it may first be reversibly moved to a section of the pipe which is not damaged. In a next step, the jacket 1200 may be moved to the damaged section R of the pipe, where it may be used to provide a repair chamber according to the invention.

Figure 23 shows a detail of a repair chamber, according to an embodiment of the invention. The jacket 1200 may comprise an interface 1213, configured for inserting or removing repair equipment into or out of the repair chamber. For example, electric wiring of an electrofusion welding equipment 1500 may be guided through the interface to provide electric supply to the electrofusion welding equipment. The remotely operated vehicle 1400 may be connected to or through the interface 1213, for example electrically and/or fluidically. For example, the remotely operated vehicle 1400 may provide electricity to repair equipment (such as welding equipment) and may pump water out of the jacket 1200 and/or pump water into the jacket 1200. The interface 1213 may comprise appropriate sealing means, such that the fluid tightness of the repair chamber, which is provided by the jacket 1200, may be ensured.

It should be noted that the term "comprising" does not exclude other elements or steps and the use of articles "a" or "an" does not exclude a plurality. Also, elements described in association with different embodiments may be combined. It should also be noted that reference signs in the claims should not be construed as limiting the scope of the claims.

## Claims

1. An offshore pipeline system (100) configured for transporting electricity and a fluid (103) to or from an offshore wind turbine (WT), the system comprising:
a pipe (101) for transporting a fluid (103),
an electric cable (102) being arranged within the pipe (101),
wherein the pipe (101) comprises a cable outlet section (110), configured for guiding the cable (102) out of the pipe for coupling it to an offshore wind turbine (WT), and
wherein a separation arrangement (111) is arranged in the cable outlet section (110),
wherein the separation arrangement (111) is configured for separating the cable (102) from the fluid (103) at the cable outlet section (110).

2. The pipeline system (100) according to claim 1,
wherein the pipe comprises a circumferential wall (440) and wherein at least part of the cable (102) is arranged within the material of the circumferential wall (440).

3. The pipeline system (100) according to any of the preceding claims,
wherein the cable outlet section (110) comprises a gas and liquid tight sealing element (112) arranged between the cable (102) and the separation arrangement (110), wherein the sealing element (112) is selected from at least one of the group consisting of:
an O-ring,
a lip seal,
a self-expanding unit,
an adhesive bond, and
a welded connection
for preventing the fluid (103) from leaking through the cable outlet section (110).

4. The pipeline system (100) according to any of the preceding claims, wherein the pipe (101) further comprises a fluid connection (220)
couplable to an offshore wind turbine (WT) for enabling a fluid transport between
the pipe and the offshore wind turbine (WT).

5. The pipeline system (100) according to claim 4,
wherein the fluid connection (220) comprises a valve (221), in particular a one-way valve, configured for controlling a flow of the fluid (103) going into or out of the pipe (101) .

6. The pipeline system (100) according to any of the preceding claims,
wherein the fluid connection (220) is arranged within the circumferential wall (440) of the pipe (101), or
wherein the fluid connection (220) is arranged at a front end (F) of the pipe (101).

7. The pipeline system (100) according to any of the preceding claims,
wherein the cable outlet section (110) is arranged within the circumferential wall of the pipe (440), or
wherein the cable outlet section (110) is arranged at a front end (F) of the pipe (101).

8. The pipeline system (100) according to any of the preceding claims,
wherein the separation arrangement (111) comprises a separation plate (331) that covers the cross section of the pipe (101) for separating the volume of the pipe (101),
wherein the sealing element (112) is formed in the separation plate (331).

9. The pipeline system (100) according to any of the preceding claims,
wherein the pipeline system (100) comprises at least one of the following features:
wherein the material of the pipe (101) is a plastic material, and
wherein the cable (102) is an onshore cable (102).

10. The pipeline system (100) according to any of the preceding claims,
wherein the pipe (101) is configured for transporting a fluid (103) selected from the group consisting of:
an electro fuel, in particular ammonia or hydrogen, oxygen,
methane,
liquefied natural gas, or
a mixture of any of the above.

11. An offshore wind park (WP) comprising:
at least one offshore wind turbine (WT), and
a pipeline system (900) according to claims 1 to 10;
wherein the at least one offshore wind turbine (WT) and the pipeline system (900) are electrically and fluidically coupled.

12. A method for assembling an offshore pipeline system configured for transporting electricity and a fluid to or from an offshore wind turbine (WT), the method comprising:
providing a pipe for transporting a fluid,
arranging an electric cable (102) within the pipe,
wherein the pipe comprises a cable outlet, configured for guiding the cable (102) out of the pipeline for coupling it to an offshore wind turbine (WT),
and
further arranging a separation arrangement (111) in the pipe,
wherein the separation arrangement (111) is configured for separating the cable (102) from the fluid at the cable outlet section (110).

13. A repair system (1000) for repairing an offshore pipeline system, in particular an offshore pipeline system (100) according to claims 1 to 11, the repair system comprising
a jacket (1200), wherein the jacket is arranged circumferentially jacketing a section (R) of a pipe (101) to be repaired of the pipeline system (100), and wherein the jacket is configured for creating a fluid tight repair chamber around the section of pipe, such that the repair chamber is configured for being free of water.

14. The repair system (1000) according to claim 13,
wherein the jacket (1200) is a jacket pipe (1210), the jacket pipe having a diameter larger than the diameter of the pipe (101) to be repaired, and at least one reduction pipe (1211) at each end of the jacket pipe (1210) for reducing the diameter of the jacket (1200) to a diameter that is substantially equal to the diameter of the pipe (101) to be repaired, or
wherein the jacket (1200) is an inflatable jacket, configured for being inflated around the section (R) of pipe (101) for creating the fluid tight repair chamber.

15. The repair system (800) according to claims 13 or 14, further comprising
a remotely operated underwater vehicle (1400),
wherein the remotely operated underwater vehicle (1400) is drivable through sea water to the repair chamber and configured for carrying out at least part of repair work for repairing an offshore pipeline system (100), in particular for installing and removing the jacket.
